# EUROPEAN PATENT APPLICATION

(11) **EP 4 412 343 A1**
(43) Date of publication of application: **07.08.2024**
(21) Application number: 21958660.9
(22) Date of filing: 28.09.2021
(51) Int. Cl.: H04W 72/04, H04L 1/18

(54) **METHOD AND APPARATUS FOR DETERMINING INITIAL TRANSMISSION POSITION OF TB**

(71) Applicant: Beijing Xiaomi Mobile Software Co., Ltd., Beijing 100085 (CN)
(72) Inventor: QIAO, Xuemei, Beijing 100085 (CN)
(74) Representative: Kudlek, Franz Thomas
(86) International application number: PCT/CN2021/121309
(87) International publication number: WO 2023/050061

(57) **Abstract**

Disclosed in embodiments of the present application are a method and apparatus for determining the initial transmission position of a TB, which can be applied to the technical field of communications. The method comprises: determining a redundancy version (RV) sequence of a plurality of time slots for transmitting a same TB in a CG period, and determining at least one initial position of TB transmission from the plurality of time slots corresponding to the RV sequence. According to the present application, the initial transmission position is determined, such that the data generated by the terminal device can be transmitted in time, the data transmission delay is shortened, and the data transmission reliability is improved.

## Description

### TECHNICAL FIELD

The present disclosure relates to a field of communication technology, and particularly to a method and an apparatus for determining a start transmission position of a transport block (TB).

### BACKGROUND

In the related art, TB processing over multiple slots (TBoMS) refers to a technique where TB is transmitted by using more than one slot, and only a part of the encoded data of the TB is transmitted in each slot. If a configured grant (CG) mode is used to perform TBoMS transmission (repetition), since a TB occupies more than one slot for transmission, in this case, it is necessary to determine a slot position that may be used to initiate the transmission.

### SUMMARY

Embodiments of the present disclosure provide a method and an apparatus for determining a start transmission position of a transport block (TB). By determining the start transmission position of the TB in more than one slot for transmitting the same TB, generated data may be transmitted in time, therefore data transmission delay is shortened and data transmission reliability is improved.

According to a first aspect, an embodiment of the present disclosure provides a method for determining a start transmission position of a TB, which is performed by a terminal device. The method includes: determining a redundancy version (RV) sequence of more than one slot for transmitting a same TB within a configured grant (CG) period; and determining at least one start transmission position of the TBoMS from the more than one slot corresponding to the RV sequence.

In the embodiment of the present disclosure, the start transmission position of the TB can be determined from the more than one slot, data generated by the terminal device may be transmitted in time, therefore data transmission delay is shortened and data transmission reliability is improved.

In an implementation, the TB is repeatedly transmitted within the CG period based on the determined start transmission position.

In an implementation, determining the at least one start transmission position of the TB from the more than one slot corresponding to the RV sequence includes: determining a first RV in the RV sequence; and determining, from more than one slot used for each transmission of the TB and corresponding to the first RV, the at least one slot as the start transmission position.

In an implementation, determining, from the more than one slot used for each transmission of the TB and corresponding to the first RV, the at least one slot as the start transmission position includes: determining the first slot corresponding to the first RV as the start transmission position.

In an implementation, determining, from the more than one slot used for each transmission of the TB and corresponding to the first RV, at least one slot as the start transmission position includes: determining the first slot corresponding to each of first RVs other than a first RV which is the last one in the RV sequence as the start transmission position, in which the RV sequence includes only first RVs; or determining the first slot corresponding to at least one first RV as the start transmission position, in which the RV sequence includes the at least one first RV and at least one other RV.

In an implementation, the method further includes: determining at least one slot used as the start transmission position in the first RV based on a number of slots occupied by each transmission of the TB and/or a modulation and coding scheme (MCS) parameter.

In an implementation, the method further includes: determining a position determination scaling factor based on the MCS parameter; and determining the at least one slot used as the start transmission position based on the number of slots occupied by each transmission of the TB and the position determination scaling factor.

In an implementation, the MCS parameter is negatively correlated with the position determination scaling factor.

In an implementation, the method further includes: in response to the MCS parameter being less than a preset threshold, determining the position determination scaling factor as a first value; or in response to the MCS parameter being great than or equal to a preset threshold, determining the position determination scaling factor as a second value, in which the second value is less than the first value.

In an implementation, the method further includes: receiving indication information sent by a network device; and determining the at least one slot used as the start transmission position in the first RV based on the indication information.

In an implementation, the method further includes: obtaining an enable signaling; and determining a number of slots used as the starting transmission position in the first RV based on the enable signaling, in which the enable signaling is used to indicate that the number of slots is one or more.

In an implementation, the method further includes: determining encoded data of data to be transmitted on each slot in the first RV; and sending remaining encoded data to a network device starting from encoded data corresponding to a slot where the start transmission position is located.

According to a first aspect, an embodiment of the present disclosure provides a method for determining a start transmission position of a TB, which is performed by a network device. The method includes: determining an RV sequence for more than one transmission of a same TB within a CG period; and determining at least one start transmission position of the TB from the more than one slot corresponding to the RV sequence.

In the embodiment of the present disclosure, the start transmission position of the TB can be determined from the more than one slot, data generated by the terminal device may be sent or received by the network device in time, therefore data transmission delay is shortened and data transmission reliability is improved.

In an implementation, the TB is repeatedly transmitted within the CG period based on the start transmission position.

In an implementation, determining the at least one start transmission position of the TB from the more than one slot corresponding to the RV sequence includes: determining a first RV in the RV sequence; and determining, from more than one slot used for each transmission of the TB and corresponding to the first RV, at least one slot as the start transmission position.

In an implementation, determining, from the more than one slot for each transmission of the TB and corresponding to the first RV, the at least one slot as the start transmission position includes: determining the first slot corresponding to the first RV as the start transmission position.

In an implementation, determining, from the more than one slot for each transmission of the TB and corresponding to the first RV, the at least one slot as the start transmission position includes: determining the first slot corresponding to each of first RVs other than a first RV which is the last one in the RV sequence as the start transmission position, in which the RV sequence includes only the first RVs; or determining the first slot corresponding to at least one first RV as the start transmission position, in which the RV sequence includes the at least one first RV and at least one other RV.

In an implementation, the method further includes: determining at least one slot used as the start transmission position and corresponding to the first RV based on a number of slots occupied by each transmission of the TB and/or a modulation and coding scheme (MCS) parameter.

In an implementation, the method further includes: determining a position determination scaling factor based on the MCS parameter; and determining the at least one slot used as the start transmission position based on the number of slots occupied by each transmission of the TB and the position determination scaling factor.

In an implementation, the MCS parameter is negatively correlated with the position determination scaling factor.

In an implementation, the method further includes: in response to the MCS parameter being less than a preset threshold, determining the position determination scaling factor as a first value; or in response to the MCS parameter being great than or equal to a preset threshold, determining the position determination scaling factor as a second value, in which the first value is less than the second value.

In an implementation, the method further includes: sending indication information to a terminal device, in which the indication information is used to indicate the at least one slot used as the start transmission position in the first RV.

In an implementation, the method further includes: sending an enable signaling to a terminal device, in which the enable signaling is used to determine that a number of slots used as the start transmission position in the first RV may be one or more.

In an implementation, the method further includes: receiving encoded data corresponding to the start transmission position sent by the terminal device on the start transmission position.

According to a third aspect, an embodiment of the present disclosure provides a communication apparatus. The communication apparatus has some or all functions of the terminal device which implements the method described in the first aspect. For example, the communication apparatus may have the function of some or all embodiments of the disclosure, or may have the function of independently implementing any embodiment of the disclosure. The function can be implemented by hardware, or can be implemented by executing corresponding software using the hardware. The hardware or software includes one or more units or modules corresponding to the above functions.

In an implementation, the communication apparatus may include a transceiver module and a processing module, and the processing module is configured to support the communication apparatus in performing a corresponding function in the foregoing method. The transceiver module is configured to support communications between the communication apparatus and another device. The communication apparatus may further include a storage module, the storage module is configured to be coupled to the transceiver module and the processing module, and store necessary computer programs and data of the communication apparatus.

The transceiver module is configured to determine an RV sequence of more than one slot for transmitting a same TB within a CG period.

The processing module is configured to determine at least one start transmission position of the TB transmission from the more than one slot corresponding to the RV sequence.

As an example, the processing module may be a processor, the transceiver module may be a transceiver or a communication interface, and the storage module may be a memory.

According to a fourth aspect, an embodiment of the present disclosure provides a communication apparatus, the communications apparatus has some or all functions of the network device in the method examples described in the second aspect. For example, the communication apparatus may have the function in some or all embodiments of the disclosure, or may have the function of independently implementing any embodiment of the disclosure. The function may be implemented by the hardware, or may be implemented by executing corresponding software using the hardware. The hardware or software includes one or more units or modules corresponding to the foregoing functions.

In an implementation, the communication apparatus may include a transceiver module and a processing module, and the processing module is configured to support the communication apparatus in performing a corresponding function in the foregoing method. The transceiver module is configured to support communications between the communication apparatus and another device. The communication apparatus may further include a storage module, the storage module is configured to be coupled to the transceiver module and the processing module, and store necessary computer programs and data of the communication apparatus.

The transceiver module is configured to determine an RV sequence of more than one slot for transmitting a same TB within a CG period.

The processing module is configured to determine at least one start transmission position of the TB transmission from the more than one slot corresponding to the RV sequence.

As an example, the processing module may be a processor, the transceiver module may be a transceiver or a communication interface, and the storage module may be a memory.

According to a fifth aspect, an embodiment of the present disclosure provides a communication apparatus, the communication apparatus includes a processor, when the processor calls a computer program stored in a memory, the method according to the first aspect is implemented.

According to a sixth aspect, an embodiment of the present disclosure provides a communication apparatus, the communication apparatus includes a processor, when the processor calls a computer program stored in a memory, the method according to the second aspect is implemented.

According to a seventh aspect, an embodiment of the present disclosure provides a communication apparatus, the communication apparatus includes a processor and a memory, the memory stores a computer program, and the processor executes the computer program stored in the memory, to cause the communication apparatus to execute the method according to the first aspect.

According to an eighth aspect, an embodiment of the present disclosure provides a communication apparatus, the communication apparatus includes a processor and a memory, the memory stores a computer program, and the processor executes the computer program stored in the memory, to causes the communication apparatus to execute the method according to the second aspect.

According to a ninth aspect, an embodiment of the present disclosure provides a communication apparatus, the communication apparatus includes a processor and an interface circuit; the interface circuit is configured to receive a code instruction and transmit the code instruction to the processor; and the processor is configured to run the code instruction to execute the method according to the first aspect.

According to a tenth aspect, an embodiment of the present disclosure provides a communication apparatus, the communication apparatus includes a processor and an interface circuit; the interface circuit is configured to receive a code instruction and transmit the code instruction to the processor; and the processor is configured to run the code instruction to execute the method according to the second aspect.

According to an eleventh aspect, an embodiment of the present disclosure provides a communication system, the communication system includes the communication apparatus according to the third aspect and the communication apparatus according to the fourth aspect, or the communication system includes the communication apparatus according to the fifth aspect and the communication apparatus according to the sixth aspect, or the communication system includes the communication apparatus according to the seventh aspect and the communication apparatus according to the eighth aspect, or the system includes the communication apparatus according to the ninth aspect and the communication apparatus according to the tenth aspect.

According to a twelfth aspect, an embodiment of the present disclosure provides a computer-readable storage medium, configured to store an instruction used by the terminal device, and when the instruction is executed, the terminal device is caused to perform the method according to the first aspect.

According to a thirteenth aspect, an embodiment of the present invention provides a readable storage medium, configured to store an instruction used by the network device, and when the instruction is executed, the network device is caused to perform the method according to the second aspect.

According to a fourteenth aspect, the present disclosure further provides a computer program product including a computer program, and when the computer program product runs on a computer, the computer is caused to perform the method according to the first aspect.

According to a fifteenth aspect, the present disclosure further provides a computer program product including a computer program, and when the computer program product runs on a computer, the computer is caused to perform the method according to the second aspect.

According to a sixteenth aspect, the present disclosure provides a chip system. The chip system includes at least one processor and an interface, for supporting the terminal device in realizing the functions involved in the first aspect, e.g., at least one of determining or processing data and information involved in the method described above. In a possible design, the chip system further includes a memory, which is configured to store computer programs and data necessary for the terminal device. The chip system may consist of chips or may include chips and other discrete devices.

According to a seventeenth aspect, the present disclosure provides a chip system. The chip system includes at least one processor and an interface, for supporting the terminal device in realizing the functions involved in the second aspect, e.g., at least one of determining or processing data and information involved in the method described above. In a possible design, the chip system further includes a memory, which is configured to store computer programs and data necessary for the terminal device. The chip system may consist of chips or may include chips and other discrete devices.

According to an eighteenth aspect, the present disclosure provides a computer program. When the computer program runs on a computer, the computer is caused to implement the method of the first aspect.

According to a nineteenth aspect, the present disclosure provides a computer program. When the computer program runs on a computer, the computer is caused to implement the method of the second aspect.

### BRIEF DESCRIPTION OF THE DRAWINGS

In order to clearly illustrate technical solutions of embodiments of the disclosure or background technologies, the accompanying drawings used in the embodiments or the background technologies will be explained below.
FIG. 1 is a block diagram of a communication system according to an embodiment of the disclosure.
FIG. 2 is a flowchart of a method for determining a start transmission position of a transport block (TB) according to an embodiment of the present disclosure;
FIG. 3 is a flowchart of another method for determining a start transmission position of a TB according to an embodiment of the present disclosure;
FIG. 4 is a flowchart of a method for determining at least one start transmission position of a TB according to an embodiment of the present disclosure;
FIG. 5 is a diagram of determining a start transmission position of a TB according to an embodiment of the present disclosure;
FIG. 6 is a flowchart of a method for determining more than one slot as the start transmission position according to an embodiment of the present disclosure;
FIG. 7 is a flowchart of a method for repeatedly transmitting a TB according to an embodiment of the present disclosure;
FIG. 8 is a flowchart of a method for encoding data from a start transmission position according to an embodiment of the present disclosure;
FIG. 9 is a diagram of encoded data at a start transmission position according to an embodiment of the present disclosure;
FIG. 10 is a flowchart of a method for determining a start transmission position of a TB according to an embodiment of the present disclosure;
FIG. 11 is a flowchart of a method for determining at least one start transmission position of a TB according to an embodiment of the present disclosure;
FIG. 12 is a flowchart of another method for determining at least one start transmission position of a TB according to an embodiment of the present disclosure;
FIG. 13 is a flowchart of a method for determining a start transmission position of a TB according to an embodiment of the present disclosure;
FIG. 14 is a flowchart of a method in which a network device receives encoded data sent by a terminal device according to an embodiment of the present disclosure;
FIG. 15 is a flowchart of a method for repeatedly transmitting a TB according to an embodiment of the present disclosure;
FIG. 16 is a block diagram of a communication apparatus according to an embodiment of the present disclosure;
FIG. 17 is a block diagram of another communication apparatus according to an embodiment of the present disclosure;
FIG. 18 is a block diagram of a chip according to an embodiment of the present disclosure.

### DETAILED DESCRIPTION

For ease of understanding, terms involved in the present disclosure are first introduced.

1. Redundancy version (RV) is used to implement incremental redundancy (IR) hybrid automatic repeat request (HARQ) transmission, that is, redundant bits generated by an encoder are divided into more than one group. Each RV defines a transmission start point, and different RVs are respectively used for the first HARQ transmission and each HARQ retransmission to implement gradual accumulation of redundant bits to complete incremental redundancy HARQ operation.

2. Modulation and coding scheme (MCS), that is, modulation and coding. The MCS forms a rate table by taking concerned factors of affecting communication rate as columns, and taking MCS indexes as rows. Each of the MCS indexes actually corresponds to a physical transmission rate using a group of parameters.

3. Configured grant (CG) refers to semi-persistent scheduling. The semi-persistent scheduling means that a base station configures a certain resource cycle for a terminal through a radio resource control (RRC) signaling, and there are same time-frequency domain resources for data transmission in each cycle. In this way, each data transmission can be completed without dynamic scheduling, so that overhead of a scheduling signaling can be reduced, and transmission delay can be reduced. An optional range of a CG period includes: 1, 2, 4, 5, 8, 10, 16, 20, 32, 40, 64, 80, 160, 256, 320, 512, 640, 1024, 1280, 2560, and 5120 slots.

In order to better understand the method for determining a start transmission position of a transport block (TB) disclosed in embodiments of the present disclosure, a communication system to which the embodiments of the present disclosure are applicable is first described below.

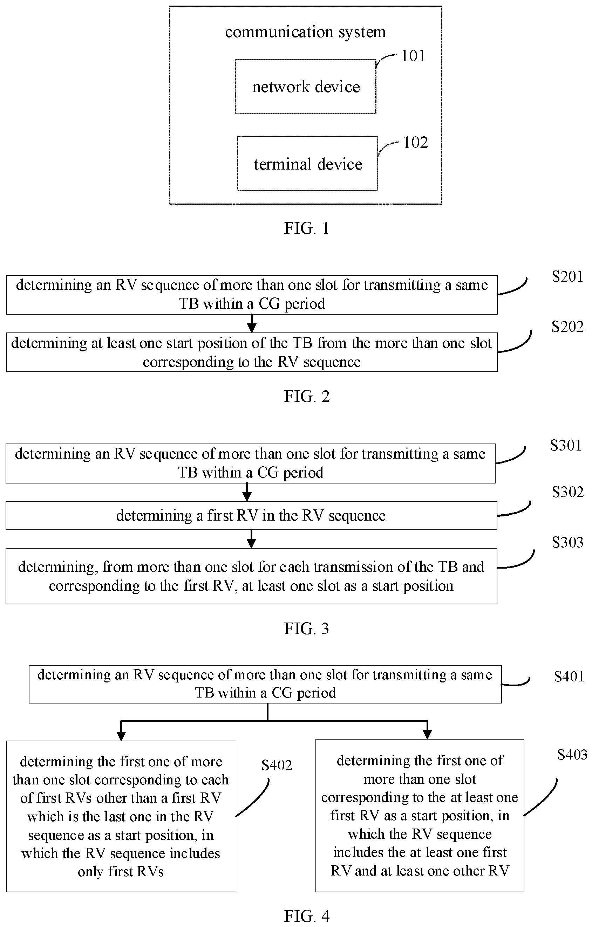

Referring to FIG. 1, FIG. 1 is a block diagram of a communication system according to an embodiment of the present disclosure. The communication system may include, but is not limited to, a network device and a terminal device. The number and form of devices shown in FIG. 1 are merely used for example and do not constitute a limitation on the embodiments of the present disclosure, and the communication system may include two or more network devices, and two or more terminal devices in practical applications. The communication system shown in FIG. 1 includes, for example, one network device 101 and one terminal device 102.

It should be noted that the technical solutions of the embodiments of the disclosure can be used in various communication systems, such as, a long term evolution (LTE) system, a 5th generation (5G) mobile communication system, a 5G new radio (NR) system, or other future new mobile communication systems.

The network device 101 in the embodiment of the present disclosure is an entity used to send or receive signals on a network side. For example, the network device 101 may be an evolved NodeB (eNB), a transmission reception point (TRP), a next generation NodeB (gNB) in an NR system, a base station in a future mobile communication system or an access node in a wireless fidelity (Wi-Fi^{™}) system, and the like. Specific technologies and specific device forms used by the network device are not limited in the embodiments of the present disclosure. The network device provided in the embodiments of the present disclosure may be composed of a central unit (CU) and a distributed unit (DU). The CU may also be referred to as a control unit. The CU-DU structure may split a protocol layer of the network device, for example, a protocol layer of the base station, some functions of the protocol layer are placed in the CU for centralized control, and some or all of the remaining functions of the protocol layer are distributed in the DU, which is intensively controlled by the CU.

The terminal device 102 in the embodiments of the present disclosure is an entity used to receive or send signals on a user side, for example, a mobile phone. The terminal device may also be referred to as a terminal, a user equipment (UE), a mobile station (MS), a mobile terminal (MT), or the like. The terminal device may be an automobile with a communication function, an intelligent automobile, a mobile phone, a wearable device, a pad, a computer with a wireless transceiver function, a virtual reality (VR) terminal device, an augmented reality (AR) terminal device, a wireless terminal device in the industrial control, a wireless terminal device in the self-driving, a wireless terminal device in the remote medical surgery, a wireless terminal device in the smart grid, a wireless terminal device in the transportation safety, a wireless terminal device in the smart city, a wireless terminal device in the smart home, etc. Specific technologies and specific device forms used by the terminal device are not limited in the embodiments of the present disclosure.

It is understood that the communication system described in the embodiments of the disclosure is intended to more clearly illustrate the technical solutions of the embodiments of the disclosure, and does not constitute a limitation on the technical solutions provided by the embodiments of the disclosure. It is understood by those skilled in the art that as the system architecture evolves and new business scenarios emerge, the technical solutions provided by the embodiments of the disclosure are also applicable to similar technical problems.

It may be understood that solutions in the embodiments of the present disclosure may be implemented separately, or may be implemented in combination, which is not limited in the present disclosure.

A method and an apparatus for determining a start transmission position of a TB provided in the present disclosure will be described below in detail with reference to the accompanying drawings.

Referring to FIG. 2, FIG. 2 is a flowchart of a method for determining a start transmission position of a TB according to an embodiment of the present disclosure, which is performed by a terminal device. As shown in FIG. 2, the method may include, but is not limited to the following steps.

At step S201, an RV sequence of more than one slot for transmitting a same TB in a CG period is determined.

In order to avoid a conflict between transmissions of various terminal devices in a communication system, the terminal devices may receive scheduling performed by a network device for transmissions of the various terminal devices. In the communication system, the terminal device and the network device may communicate in slots corresponding to certain time and frequency resources of a channel. Each of the slots may include more than one symbol period and correspond to a bandwidth. Each of the slots may include a control channel for transmitting control information and a shared data channel for transmitting uplink and/or downlink data. The network device may send a scheduling grant on the control channel of the slot. The scheduling grant allocates some or all of the shared data channel of the slot to the terminal device. The terminal device may send or receive data using the shared data channel according to the scheduling grant.

After the radio resource control (RRC) signaling sent by the network device is received, the terminal device may obtain configured grant information from parsing of the RRC signaling. A configuration parameter related to the configured grant is determined based on the configured grant information, and the configuration parameter is used when the terminal device is in a multi-subband operating mode. The configured grant information may include a configured scheduling radio network temporary identifier, a downlink configured grant configuration, and/or an uplink configured grant configuration. The configured scheduling radio network temporary identifier is an identifier for a configured grant scheduling mode. The downlink configured grant configuration is used to configure downlink transmission in a configured grant mode. The uplink configured grant configuration is used to configure uplink transmission in the configured grant mode.

CG may support a same TB being transmitted over multiple slots, that is, TB processing over multiple slots (TBoMS). That is, the CG is combined with the multi-slot transmission. The terminal device may receive the RV sequence of the more than one slot for transmitting the same TB within a CG period sent by the network device, or the terminal device may determine, based on a protocol agreement, the RV sequence of the more than one slot for transmitting the same TB within the CG period.

The RV sequence may be a sequence of at least one redundancy version for sending the TB. The TB is data to be transmitted which is delivered by a medium access control (MAC) layer to a physical layer. The terminal device transmits the TB using more than one slot, and only a part of encoded data of the TB is transmitted in each slot.

At step S202, at least one start transmission position of the TB is determined from the more than one slot corresponding to the RV sequence.

In a semi-static transmission period, the RV sequence corresponds to more than one slot. The more than one slot may use a same redundancy version, or may use different redundancy versions, which may be determined based on a configuration of the network device, or may be determined by using a protocol agreement. For example, the RV sequence may be {RV#0, RV#0, RV#0, RV#0}, or {RV#0, RV#3, RV#0, RV#3 }, or {RV#0, RV#2, RV#3, RV#1} and the like. The RV sequence is merely an example, and cannot be used as a condition for limiting the present disclosure.

It should be noted that when more than one slot is used to transmit the same TB, that is, in a TBoMS scenario, the same time domain resource is occupied by different slots, frequency domain resources with a same length are occupied by different slots, and frequency domain resource positions may be the same or different. When frequency hopping is enabled, the frequency domain resource positions are different. When frequency hopping is disabled, the frequency domain resource positions are the same.

Further, when the terminal device generates data, in order to perform data transmission in time to shorten the transmission delay, the terminal device may perform data retransmission on a non-first slot, and a slot in which the data transmission may be initiated is configured as a start transmission position. In the embodiment of the present disclosure, at least one start transmission position of the TB transmission may be determined from the more than one slot corresponding to the RV sequence. In some implementations, there may be one or more start transmission positions corresponding to the TB transmission. In some implementations, the start transmission position corresponding to the TB transmission may be the first slot (i.e., the first one of the more than one slot) or a slot which is not the first slot. In some implementations, the start transmission position corresponding to the TB transmission may be a slot included in a specific redundancy version, or may be a slot included in each redundancy version. When there are more than one start transmission position corresponding to the TB transmission, they may be first few slots of the more than one slot or last few slots of the more than one slot.

The embodiments of the present disclosure provide a method for determining a start transmission position of a TB. In a scenario in which the CG supports TBoMS transmission, an RV sequence of more than one slot for transmitting a same TB within a CG period is determined, and at least one start transmission position of the TB transmission is determined from the more than one slot corresponding to the RV sequence. In the embodiment of the present disclosure, the start transmission position of the TB transmission can be determined from the more than one slot for transmitting the same TB, data generated by the terminal device may be transmitted in time, therefore data transmission delay is shortened and data transmission reliability is improved.

FIG. 3 is a flowchart of a method for determining a start transmission position of a TB according to an embodiment of the present disclosure, which is performed by a terminal device. As shown in FIG. 3, the method may include the following steps.

At step S301, an RV sequence of more than one slot for transmitting a same TB within a CG period is determined.

The step S301 may be implemented by using the implementations in the embodiments of the present disclosure, and details are not described herein again.

At step S302, a first RV in the RV sequence is determined.

According to the obtained RV sequence, any redundancy version is determined as the first RV For example, RV#0 in the RV sequence may be used as the first RV. Optionally, other redundancy versions in the RV sequence may also be used as the first RV.

At step S303, at least one slot is determined, from more than one slot for each transmission of the TB and corresponding to the first RV, as the start transmission position.

As an implementation, at least one slot is determined from more than one slot used by each TB transmission and corresponding to the first RV in the RV sequence as the start transmission position. For example, when determining that RV#0 is the first RV, and the RV#0 may correspond to four slots, the first slot in the four slots of RV#0 may be determined as the start transmission position. Or, the first two slots in the four slots of RV#0 may be determined as the start transmission position. Or, all the four slots of RV#0 may be determined as the start transmission position. In other words, in the TBoMS scenario of the CG, each slot corresponding to each RV#0 in the RV sequence may be used as a start transmission slot.

As another implementation, the terminal device may receive indication information sent by the network device, and determine a slot used as the start transmission position in the first RV based on the indication information. For example, the terminal device may receive the indication information sent by the network device. The indication information may directly indicate the slot used as the start transmission position. For example, the indication information may directly indicate that the first slot corresponding to the first RV#0 in the RV sequence is used as the start transmission position.

As another implementation, the terminal device may receive the indication information sent by the network device, and determine more than one slot used as the start transmission position in the first RV based on the indication information. For example, the terminal device may receive the indication information sent by the network device. The indication information may directly indicate the slot used as the start transmission position. For example, the indication information may directly indicate that first three slots corresponding to the first RV#0 in the RV sequence are used as the start transmission position.

In the embodiment of the present disclosure, by determining the start transmission position, data generated by the terminal device may be transmitted in time, therefore data transmission delay is shortened and data transmission reliability is improved.

FIG. 4 is a flowchart of a method for determining a start transmission position of a TB according to an embodiment of the present disclosure, and the method is executed by a terminal device. As shown in FIG. 4, when it is determined that one slot is used as the start transmission position, determining the start transmission position of the TBoMS from the more than one slot corresponding to the RV sequence may include the following steps.

At step S401, an RV sequence of more than one slot for transmitting a same TB within a CG period is determined.

The step S401 may be implemented by using the implementations in the embodiments of the present disclosure, and details are not described herein again.

At step S402, the first slot corresponding to each of first RVs other than a first RV which is the last one in the RV sequence is determined as a start transmission position, the RV sequence includes only the first RVs.

For example, RV#0 in the RV sequence may be used as the first RV. In response to the RV sequence including only the first RVs, that is, the RV sequence = {RV#0, RV#0, RV#0, RV#0}, all RVs in the RV sequence are RV#0, except the last RV#0 in the RV sequence, the first slot corresponding to each remaining RV#0 is determined as the start transmission position. That is, the terminal device may only initiate transmission on the first slots corresponding respectively to the first three RV#0s in the RV sequence, but cannot initiate transmission on all slots corresponding to the last RV#0 in the RV sequence. The first slot, i.e., the first one of the slot(s), corresponding to each of the remaining first RVs other than the first RV which is the last one in the RV sequence is determined as the start transmission position.

At step S403, the first slot corresponding to at least one first RV is determined as the start transmission position, the RV sequence includes the at least one first RV and at least one other RV.

For example, RV#0 in the RV sequence may be used as the first RV. In response to an obtained RV sequence including not only the first RV, but also other RVs, the first slot, i.e., the first one of the slot(s), corresponding to each first RV is determined as the start transmission position. There may be one or more first RVs.

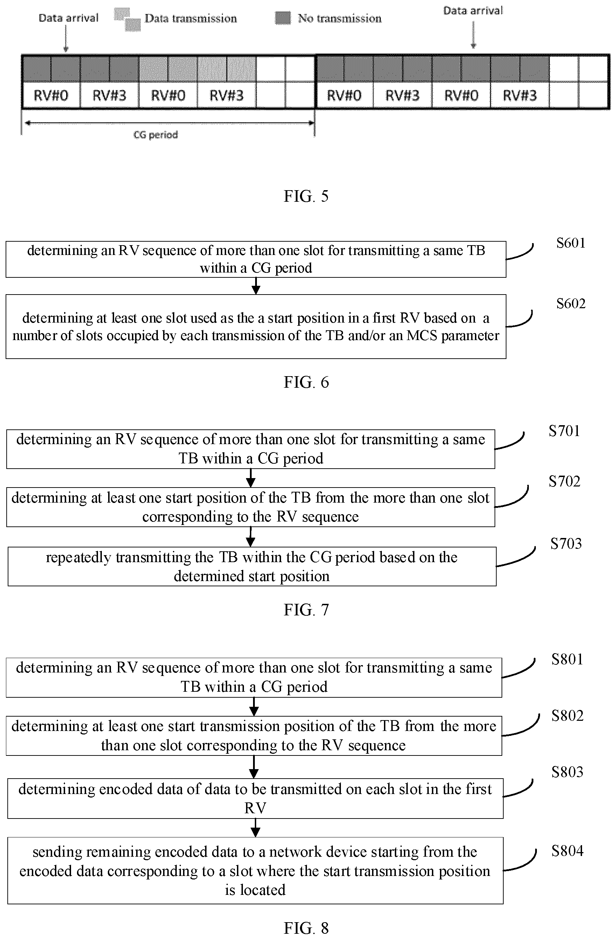

As an implementation, if the RV sequence = {RV#0, RV#3, RV#0, RV#3}, that is, the RV sequence includes not only more than one first RV, but also other RVs, the terminal device may only initiate the transmission on the first slot, i.e., the first one of the slot(s), corresponding to RV#0, that is, the first slot corresponding to RV#0 is determined as the start transmission position. As shown in FIG. 5, the RV sequence = {RV#0, RV#3, RV#0, RV#3}. When data is generated before the second slot, i.e., the second one of the slot(s), corresponding to the first RV#0, the first slot, i.e., the first one of the slot(s), corresponding to the second RV#0 is determined as the start transmission position, and data transmission is started in the first slot corresponding to the second RV#0.

As another implementation, if the RV sequence = {RV#0, RV#2, RV#3, RV#1}, that is, the RV sequence includes not only one first RV, but also other RVs, the terminal device may only initiate the transmission on the first slot, i.e., the first one of the slot(s), corresponding to the first RV#0, that is, the first slot corresponding to the first RV#0 is determined as the start transmission position.

In the embodiment of the present disclosure, the start transmission position of the TB transmission is determined from the more than one slot corresponding to the RV sequence, data generated by the terminal device may be transmitted in time, therefore data transmission delay is shortened and data transmission reliability is improved.

FIG. 6 is a flowchart of a method for determining a start transmission position of a TB according to an embodiment of the present disclosure, which is performed by a terminal device. As shown in FIG. 6, the method may include the following steps.

At step S601, an RV sequence of more than one slot for transmitting a same TB within a CG period is determined.

For step S601, the foregoing embodiment has been described in detail, and details are not described herein again.

At step S602, at least one slot used as a start transmission position in a first RV is determined based on a number of slots occupied by each transmission of the TB and/or an MCS parameter.

As a possible implementation, a position determination scaling factor is determined according to the MCS parameter. The at least one slot used as the start transmission position is determined according to the number of slots occupied by each TB transmission and the position determination scaling factor.

The MCS forms a rate table by taking concerned factors of affecting communication rate as columns, and taking MCS indexes as rows. Each of the MCS indexes actually corresponds to a physical transmission rate using a group of parameters.

Optionally, the MCS parameter is determined based on a network indication or a protocol agreement. The position determination scaling factor may be determined based on the MCS parameter. The position determination scaling factor is denoted as 1/P. The MCS parameter is negatively correlated with the position determination scaling factor, that is, the larger the MCS parameter is, the smaller the position determination scaling factor is. It should be noted that, if the position determination scaling factor is denoted as P, the MCS is positively correlated with the position determination scaling factor.

In some implementations, a threshold is set for the MCS parameter. When the MCS parameter is less than the set threshold, the position determination scaling factor is determined as a first value. When the MCS parameter is greater than or equal to the set threshold, the position determination scaling factor is determined as a second value. For example, when determining the start transmission position based on a formula: the 1^{st}~(N*1/P)^{th} slots, it should be noted that, if the position determination scaling factor is P, since the MCS is positively correlated with P, the first value is less than the second value. If the position determination scaling factor is 1/P, since the MCS is negatively correlated with 1/P, the first value is greater than the second value.

For example, on the basis of the above formula, the position determination scaling factor is P, the set threshold is set to K, the first value is set to 4, and the second value is set to 8. When the MCS parameter is less than k, the position determination scaling factor is determined as 4. When the MCS parameter is greater than or equal to k, the position determination scaling factor is determined as 8.

In some implementations, a threshold is set for the MCS parameter. When the MCS parameter is less than the set threshold, the position determination scaling factor is determined as a first value. When the MCS parameter is greater than or equal to the set threshold, the position determination scaling factor is not enabled, and the first slot, i.e., the first one of the slot(s), corresponding to the first RV is directly used as the start transmission position. For example, the set threshold may be set to k, and the first value is set to 4. When the MCS parameter is less than k, the position determination scaling factor is determined as 4. When the MCS parameter is greater than or equal to k, the position determination scaling factor is not enabled, and the first slot corresponding to the first RV is directly used as the start transmission position.

In some implementations, a mapping relationship between MCS parameters and position determination scaling factors may be preset. After the MCS parameter is obtained, the mapping relationship may be queried to determine the position determination scaling factor.

In addition to determining the position determination scaling factor according to the MCS parameter, the position determination scaling factor may also be directly determined based on the network indication or the protocol agreement. For example, a protocol may agree that the position determination scaling factor is 4.

The number of slots occupied by each TB transmission is obtained, and is denoted as N. The slot used as the start transmission position is determined according to the number of slots occupied by each TB transmission and the position determination scaling factor. For example, the start transmission position may be set to the 1^{st}~(N*1/P+1)^{th} slots. If the position determination scaling factor P = 4 and the number N of slots occupied by once transmission of the TBoMS is 4, the start transmission position is the 1^{st}~2^{nd} slots. If the position determination scaling factor P = 4 and the number N of slots occupied by once TB transmission is 8, the start transmission position is the 1^{st}~3^{rd} slots. It is conceivable that when the scaling factor P is greater than the number N of slots occupied by once TB transmission, the scaling factor is not enabled, and the first slot, i.e., the first one of the slot(s), corresponding to the first RV is directly used as the start transmission position.

In the embodiment of the present disclosure, by determining the scaling factor and determining at least one slot used as the start transmission position according to the number of slots occupied by once TB transmission and the MCS parameter, data generated by the terminal device may be transmitted in time, therefore data transmission delay is shortened, transmission redundancy is increased, and data transmission reliability is improved.

FIG. 7 is a flowchart of a method for determining a start transmission position of a TB according to an embodiment of the present disclosure, which is performed by a terminal device. As shown in FIG. 7, the method may include the following steps.

At step S701, an RV sequence of more than one slot for transmitting a same TB within a CG period is determined.

At step S702, at least one start transmission position of the TB is determined from the more than one slot corresponding to the RV sequence.

The steps S701-S702 may be implemented by using the implementations in the embodiments of the present disclosure, and details are not described herein again.

S703, the TB is repeatedly transmitted within the CG period based on the determined start transmission position.

In a scenario in which the CG supports TBoMS, repetitions of the TB may also be supported. In the embodiments of the present disclosure, after the start transmission position of the TB transmission is determined, the TB may be repeatedly transmitted for more than one time within the CG period. For example, the number of retransmissions is 8, then the TB is repeatedly transmitted for 8 times within the CG period, and each transmission is started based on the determined start transmission position.

In the embodiment of the present disclosure, the start transmission position of the TB transmission is determined from the more than one slot corresponding to the RV sequence, data generated by the terminal device may be transmitted in time, therefore data transmission delay is shortened and data transmission reliability is improved. In addition, based on a repetition mechanism, a problem of loss of the TB during transmission can be solved, and security and integrity of data transmission are provided.

FIG. 8 is a flowchart of a method for determining a start transmission position of a TB according to an embodiment of the present disclosure, which is performed by a terminal device. As shown in FIG. 8, the method may further include the following steps.

At step S801, an RV sequence of more than one slot for transmitting a same TB within a CG period is determined.

At step S802, at least one start transmission position of the TB is determined from the more than one slot corresponding to the RV sequence.

The steps S801-S802 may be implemented by using the implementations in the embodiments of the present disclosure, and details are not described herein again.

At step S803, encoded data of data to be transmitted on each slot in a first RV is determined.

For example, if four slots in the first RV are occupied by the TB transmission each time, the encoded data of the data to be transmitted on each slot in the first RV is obtained. That is, the encoded data of the data to be transmitted is allocated to more than one slot for transmission, and each slot corresponds to a part of the encoded data of the data to be transmitted.

At step S804, remaining encoded data is sent to a network device starting from the encoded data corresponding to the slot where the start transmission position is located.

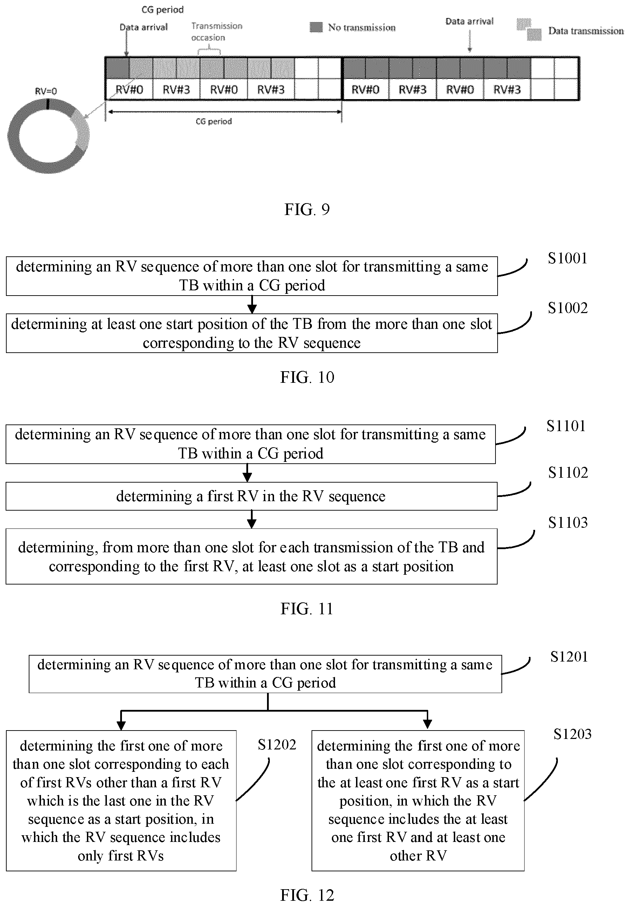

FIG. 9 is a diagram of a terminal device sending encoded data to a network device. As shown in FIG. 9, if encoded data is generated in the first slot, i.e., the first one of the slot(s), in a first RV, the terminal device may start to perform transmission in the second slot, i.e., the second one of the slot(s), in the first RV. The data transmitted in the second slot is still the encoded data corresponding to its slot position. For example, if the encoded data of data to be transmitted generated by the terminal device on each slot in the first RV is 12, 34, 56, and 78, respectively. When the terminal device starts to perform transmission on the second slot in the first RV, the terminal device directly transmits 34, 56, and 78 according to a slot order without transmitting 12 corresponding to the first slot in the first RV.

In the embodiment of the present disclosure, confusion of data reception by the network device is avoided, data transmission delay is shortened, transmission redundancy is increased, and data transmission reliability is improved.

Based on the foregoing embodiments, the method for determining a start transmission position of a TB provided in the embodiment of the present disclosure may further include the following steps.

The terminal device may further obtain an enable signaling, and directly determine the number of slots used as the start transmission position in the first RV in the RV sequence based on the enable signaling. The enable signaling is used to determine that the number of slots of the start transmission position may be one or more. For example, the enable signaling may set a 1-bit indication parameter. When the enable signaling indicates "1", it means that more than one slot may be used as the start transmission position. When the enable signaling indicates "0", it means that only one time slot is used as the start transmission position.

FIG. 10 is a flowchart of a method for determining a start transmission position of a TB according to an embodiment of the present disclosure, which is performed by a network device. As shown in FIG. 10, the method may include, but is not limited to, the following steps.

At step S 100 1, an RV sequence of more than one slot for transmitting a same TB within a CG period is determined.

In a scenario in which CG supports TBoMS transmission, the network device may configure an RV sequence of more than one slot for transmitting the same TB within the CG period, or determine the RV sequence within the CG period based on a protocol agreement. The RV sequence may be a sequence of at least one redundancy version of sending the TB. Optionally, after the RV sequence of the more than one slot for transmitting the same TB within the CG period is configured, the network device may send the RV sequence to a terminal device, so that the terminal device may determine the start transmission position of the TB transmission from the more than one slot corresponding to the RV sequence.

At step S1002, at least one start transmission position of the TB is determined from the more than one slot corresponding to the RV sequence.

In a semi-static transmission period, the RV sequence corresponds to more than one slot. The more than one slot may use a same redundancy version, or may use different redundancy versions, which may be determined based on a configuration of the network device, or may be determined by using a protocol agreement. For example, the RV sequence may be {RV#0, RV#0, RV#0, RV#0}, or {RV#0, RV#3, RV#0, RV#3 }, or {RV#0, RV#2, RV#3, RV#1} and the like. The RV sequence is merely an example, and cannot be used as a condition for limiting the present disclosure.

It should be noted that in slots of TBoMS for blind retransmission, the same time domain resource is occupied by different slots, frequency domain resources with a same length are occupied by different slots, and frequency domain resource positions may be the same or different. When frequency hopping is enabled, the frequency domain resource positions are different. When frequency hopping is disabled, the frequency domain resource positions are the same.

Further, the network device needs to receive data sent by the terminal device. When the terminal device generates data, in order to perform data transmission in time to shorten the transmission delay, the terminal device may perform data retransmission on a non-first slot, and a slot in which the data transmission may be initiated is configured as a start transmission position. In the embodiment of the present disclosure, at least one start transmission position of the TB transmission may be determined from the more than one slot corresponding to the RV sequence. In some implementations, there may be one or more start transmission positions corresponding to the TB transmission. In some implementations, the start transmission position corresponding to the TB transmission may be the first slot (i.e., the first one of the more than one slot) or a slot which is not the first slot. In some implementations, the start transmission position corresponding to the TB transmission may be a slot included in a specific redundancy version, or may be a slot included in each redundancy version. When there are more than one start transmission position corresponding to the TB transmission, they may be first few slots of the more than one slot or last few slots of the more than one slot.

The embodiments of the present disclosure provide a method for determining a start transmission position of a TB. In the scenario in which the CG supports the TBOMS transmission, the RV sequence within the CG period is determined, and at least one start transmission position of the TBoMS is determined from the more than one slot corresponding to the RV sequence. In the embodiment of the present disclosure, by determining the start transmission position, the network device may send or receive the data generated by the terminal device in time, therefore data transmission delay is shortened and data transmission reliability is improved.

FIG. 11 is a flowchart of a method for determining a start transmission position of a TB according to an embodiment of the present disclosure, which is performed by a network device. As shown in FIG. 11, the method may include, but is not limited to, the following steps.

At step S1101, an RV sequence of more than one slot for transmitting a same TB in a CG period is determined.

The step S1101 may be implemented by using the implementations in the embodiments of the present disclosure, and details are not described herein again.

At step S1102, a first RV in the RV sequence is determined.

According to the obtained RV sequence, any redundancy version is determined as the first RV For example, RV#0 in the RV sequence may be used as the first RV. Optionally, other redundancy versions in the RV sequence may also be used as the first RV.

At step S 1103, at least one slot is determined, from more than one slot for each transmission of the TB and corresponding to the first RV, as the start transmission position.

As an implementation, at least one slot is determined from more than one slot used by each TB transmission and corresponding to the first RV in the RV sequence as the start transmission position. For example, when determining that RV#0 is the first RV, and the RV#0 may correspond to four slots, the first slot in the four slots of RV#0 may be determined as the start transmission position. Or, the first two slots in the four slots of RV#0 may be determined as the start transmission position. Or, all the four slots of RV#0 may be determined as the start transmission position.

As another implementation, the network device may send indication information to the terminal device, and determine a slot used as the start transmission position in the first RV based on the indication information. For example, the network device may send the indication information to the terminal device. The indication information may directly indicate the slot used as the start transmission position. For example, the indication information may directly indicate that the first slot corresponding to the first RV#0 in the RV sequence is used as the start transmission position.

As another implementation, the network device may send the indication information to the terminal device, and determine more than one slot used as the start transmission position in the first RV based on the indication information. For example, the network device may send the indication information to the terminal device. The indication information may directly indicate the slot used as the start transmission position. For example, the indication information may directly indicate that first three slots corresponding to the first RV#0 in the RV sequence are used as the start transmission position.

In the embodiment of the present disclosure, by determining the start transmission position, the network device may receive the data generated by the terminal device in time, therefore data transmission delay is shortened and data transmission reliability is improved.

FIG. 12 is a flowchart of a method for determining a start transmission position of a TB according to an embodiment of the present disclosure, which is performed by a network device. As shown in FIG. 12, the method may include, but is not limited to, the following steps.

At step S1201, an RV sequence of more than one slot for transmitting a same TB within a CG period is determined.

The step S1201 may be implemented by using the implementations in the embodiments of the present disclosure, and details are not described herein again.

At step S1202, the first slot corresponding to each of first RVs other than a first RV which is the last one in the RV sequence is determined as a start transmission position, the RV sequence includes only the first RVs.

For example, RV#0 in the RV sequence may be used as the first RV. In response to the RV sequence including only the first RVs, that is, the RV sequence = {RV#0, RV#0, RV#0, RV#0}, all RVs in the RV sequence are RV#0, except the last RV#0 in the RV sequence, the first slot corresponding to each remaining RV#0 is determined as the start transmission position. That is, the network device may receive transmission initiated by a terminal device on the first slots corresponding respectively to the first three RV#0s in the RV sequence. The terminal device cannot initiate transmission on all slots corresponding to the last RV#0 in the RV sequence. The first slot, i.e., the first one of the slot(s), corresponding to each of the remaining first RVs other than the first RV which is the last one in the RV sequence is determined as the start transmission position.

At step S1203, the first slot corresponding to at least one first RV is determined as the start transmission position, the RV sequence includes the at least one first RV and at least one other RV.

For example, RV#0 in the RV sequence may be used as the first RV. In response to an obtained RV sequence including not only the first RV, but also other RVs, the first slot, i.e., the first one of the slot(s), corresponding to each first RV is determined as the start transmission position. There may be one or more first RVs.

As an implementation, if the RV sequence = {RV#0, RV#3, RV#0, RV#3}, that is, the RV sequence includes not only more than one first RV, but also other RVs, the network device may receive the transmission initiated by the terminal device on the first slot, i.e., the first one of the slot(s), corresponding to RV#0. That is, the first slot corresponding to RV#0 is determined as the start transmission position.

As another implementation, if the RV sequence = {RV#0, RV#2, RV#3, RV#1}, that is, the RV sequence includes not only one first RV, but also other RVs, the network device may receive the transmission initiated by the terminal device on the first slot, i.e., the first one of the slot(s), corresponding to the first RV#0. That is, the first slot corresponding to the first RV#0 is determined as the start transmission position.

In the embodiment of the present disclosure, by determining the start transmission position, the network device may receive the data generated by the terminal device in time, therefore data transmission delay is shortened and data transmission reliability is improved.

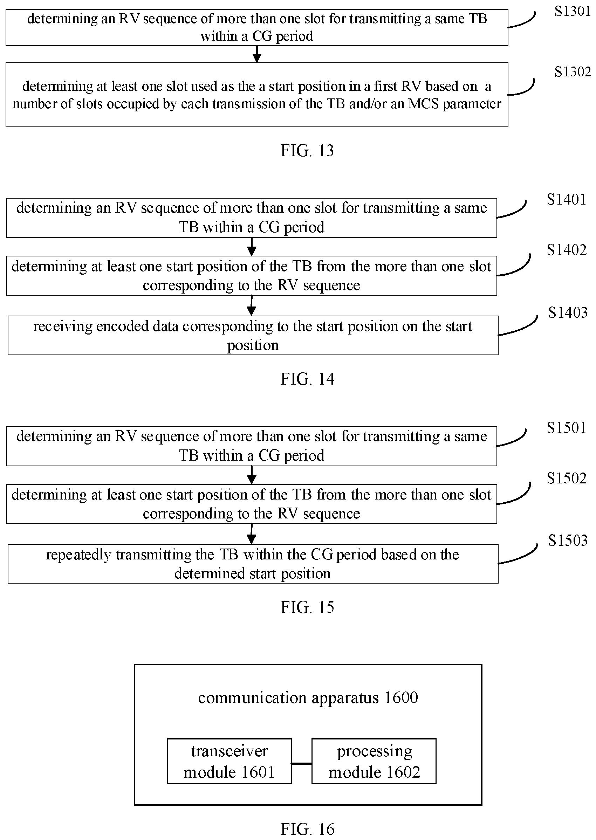

FIG. 13 is a flowchart of a method for determining a start transmission position of a TB according to an embodiment of the present disclosure, which is performed by a network device. As shown in FIG. 13, the method may include, but is not limited to, the following steps.

At step S1301, an RV sequence of more than one slot for transmitting a same TB within a CG period is determined.

The step S1301 may be implemented by using the implementations in the embodiments of the present disclosure, and details are not described herein again.

At step S1302, at least one slot used as a start transmission position in a first RV is determined based on a number of slots occupied by each transmission of the TB and/or an MCS parameter.

As a possible implementation, a position determination scaling factor is determined according to the MCS parameter. The at least one slot used as the start transmission position is determined according to the number of slots occupied by once TBoMS transmission and the position determination scaling factor.

The MCS forms a rate table by taking concerned factors of affecting communication rate as columns, and taking MCS indexes as rows. Each of the MCS indexes actually corresponds to a physical transmission rate using a group of parameters.

Optionally, the MCS parameter is determined based on a network indication or a protocol agreement. The position determination scaling factor may be determined based on the MCS parameter. The position determination scaling factor is denoted as 1/P. The MCS parameter is negatively correlated with the position determination scaling factor, that is, the larger the MCS parameter is, the smaller the position determination scaling factor is. It should be noted that, if the position determination scaling factor is denoted as P, the MCS is positively correlated with the position determination scaling factor.

In some implementations, a threshold is set for the MCS parameter. When the MCS parameter is less than the set threshold, the position determination scaling factor is determined as a first value. When the MCS parameter is greater than or equal to the set threshold, the position determination scaling factor is determined as a second value. For example, when determining the start transmission position based on a formula: the 1^{st}~(N*1/P)^{th} slots, it should be noted that, if the position determination scaling factor is P, since the MCS is positively correlated with P, the first value is less than the second value. If the position determination scaling factor is 1/P, since the MCS is negatively correlated with 1/P, the first value is greater than the second value.

For example, on the basis of the above formula, the position determination scaling factor is P, the set threshold is set to K, the first value is set to 4, and the second value is set to 8. When the MCS parameter is less than k, the position determination scaling factor is determined as 4. When the MCS parameter is greater than or equal to k, the position determination scaling factor is determined as 8.

In some implementations, a threshold is set for the MCS parameter. When the MCS parameter is less than the set threshold, the position determination scaling factor is determined as a first value. When the MCS parameter is greater than or equal to the set threshold, the position determination scaling factor is not enabled, and the first slot, i.e., the first one of the slot(s), corresponding to the first RV is directly used as the start transmission position. For example, the set threshold may be set to k, and the first value is set to 4. When the MCS parameter is less than k, the position determination scaling factor is determined as 4. When the MCS parameter is greater than or equal to k, the position determination scaling factor is not enabled, and the first slot corresponding to the first RV is directly used as the start transmission position.

In some implementations, a mapping relationship between MCS parameters and position determination scaling factors may be preset. After the MCS parameter is obtained, the mapping relationship may be queried to determine the position determination scaling factor.

In addition to determining the position determination scaling factor according to the MCS parameter, the position determination scaling factor may also be directly determined based on the network indication or the protocol agreement. For example, a protocol may agree that the position determination scaling factor is 4.

The number of slots occupied by each TB transmission is obtained, and is denoted as N. The slot used as the start transmission position is determined according to the number of slots occupied by each TB transmission and the position determination scaling factor. For example, the start transmission position may be set to the 1^{st}~(N*1/P+1)^{th} slots. If the position determination scaling factor P = 4 and the number N of slots occupied by each TB transmission is 4, the start transmission position is the 1^{st}~2^{nd} slots. If the position determination scaling factor P = 4 and the number N of slots occupied by each TB transmission is 8, the start transmission position is the 1^{st}~3^{rd} slots. It is conceivable that when the scaling factor P is greater than the number N of slots occupied by once TB transmission, the scaling factor is not enabled, and the first slot, i.e., the first one of the slot(s), corresponding to the first RV is directly used as the start transmission position.

In the embodiment of the present disclosure, by determining the scaling factor and determining at least one slot used as the start transmission position according to the number of slots occupied by once TBoMS transmission and the MCS parameter, the network device may receive the data generated by the terminal device in time, therefore data transmission delay is shortened, and data transmission reliability is improved.

FIG. 14 is a flowchart of a method for determining a start transmission position of a TB according to an embodiment of the present disclosure, which is performed by a network device. As shown in FIG. 14, the method may include, but is not limited to, the following steps.

At step S1401, an RV sequence of more than one slot for transmitting a same TB within a CG period is determined.

At step S1402, at least one start transmission position of the TB is determined from the more than one slot corresponding to the RV sequence.

The steps S1401-S1402 may be implemented by using the implementations in the embodiments of the present disclosure, and details are not described herein again.

At step S1403, encoded data corresponding to the start transmission position is received on the start transmission position.

For example, if four slots in a first RV is occupied by once TBoMS transmission, encoded data of data to be transmitted on each slot in the first RV generated by a terminal device is determined.

If the encoded data is generated in the first slot, i.e., the first one of the slot(s), in a first RV, the network device may receive data that starts to be transmitted by the terminal device on the second slot, i.e., the second one of the slot(s), in the first RV. The data transmitted in the second slot is still the encoded data corresponding to its slot position. For example, if the encoded data of data to be transmitted generated by the terminal device on each slot in the first RV is 12, 34, 56, and 78, respectively. When the terminal device starts to perform transmission on the second slot in the first RV, the terminal device directly transmits 34, 56, and 78 according to a slot order without transmitting 12 corresponding to the first slot in the first RV. The network device may receive 34, 56, 78 that starts to be transmitted by the terminal device on the second slot in the first RV according to the slot order.

In the embodiment of the present disclosure, confusion of data reception by the network device is avoided, the network device may receive the data generated by the terminal device in time, data transmission delay is shortened, transmission redundancy is increased, and data transmission reliability is improved.

Based on the foregoing embodiments, the method for determining a start transmission position of a TB provided in the embodiment of the present disclosure may further include the following steps.

The network device may further send an enable signaling to the terminal device, and the enable signaling directly indicates the number of slots used as the start transmission position in the first RV in the RV sequence. The enable signaling is used to indicate that the number of slots of the start transmission position may be one or more. For example, the enable signaling may set a 1-bit indication parameter. When the enable signaling indicates "1", it means that more than one slot may be used as the start transmission position. When the enable signaling indicates "0", it means that only one time slot is used as the start transmission position.

FIG. 15 is a flowchart of a method for determining a start transmission position of a TB according to an embodiment of the present disclosure, which is performed by a terminal device. As shown in FIG. 15, the method may include, but is not limited to, the following steps.

At step S1501, an RV sequence of more than one slot for transmitting a same TB within a CG period is determined.

At step S 1502, at least one start transmission position of the TB is determined from the more than one slot corresponding to the RV sequence.

The steps S1501~S 1502 may be implemented by using the implementations in the embodiments of the present disclosure, and details are not described herein again.

S1503, the TB is repeatedly transmitted within the CG period based on the determined start transmission position.

In a scenario in which the CG supports TBoMS, repetitions of the TB may also be supported. In the embodiments of the present disclosure, after the start transmission position of the TB transmission is determined, the TB may be repeatedly transmitted for more than one time within the CG period. For example, the number of retransmissions is 8, then the TB is repeatedly transmitted for 8 times within the CG period, and each transmission is started based on the determined start transmission position.

In the embodiment of the present disclosure, the start transmission position of the TB transmission is determined from the more than one slot corresponding to the RV sequence, data may be transmitted in time, therefore data transmission delay is shortened and data transmission reliability is improved. In addition, based on a repetition mechanism, a problem of loss of the TB during transmission can be solved, and security and integrity of data transmission are provided.

In the above embodiments of the disclosure, the methods according to the embodiments of the disclosure are described from the perspectives of the network device and the terminal device, respectively. In order to realize each of the functions in the methods according to the above embodiments of the disclosure, the network device and the terminal device may include a hardware structure, a software module, and realize each of the above functions in the form of hardware structure, software module, or a combination of hardware structure and software module. A certain function of the above functions may be performed in the form of hardware structure, software module, or a combination of hardware structure and software module.

Referring to FIG. 16, FIG. 16 is a block diagram of a communication apparatus 1600 according to an embodiment of the present disclosure. The communication apparatus 1600 as shown in FIG. 16 may include a transceiver module 1601 and a processing module 1602. The transceiver module 1601 may include a sending module and/or a receiving module. The sending module is configured to implement a sending function. The receiving module is configured to implement a receiving function. The transceiver module 1601 may implement the sending function and/or the receiving function.

The communication apparatus 1600 may be a terminal device, or may be an apparatus in the terminal device, or may be an apparatus capable of being used in combination with the terminal device. Alternatively, the communication apparatus 1600 may be a network device, or may be an apparatus in the network device, or may be an apparatus capable of being used in combination with the network device.

When the communication apparatus 1600 is the terminal device, the communication apparatus 1600 may include the transceiver module 1601 and the processing module 1602.

The transceiver module 1601 is configured to determine an RV sequence of more than one slot for transmitting a same TB within a CG period.

The processing module 1602 is configured to determine at least one start transmission position of TBoMS from the more than one slot corresponding to the RV sequence.

Further, the processing module 1602 is further configured to: repeatedly transmit the TB within the CG period based on the determined start transmission position.

Further, the processing module 1602 is further configured to: determine a first RV in the RV sequence; and determine, from more than one slot used for each transmission of the TB and corresponding to the first RV, the at least one slot as the start transmission position.

Further, the processing module 1602 is further configured to: determining the first slot used for each transmission of the TB and corresponding to the first RV as the start position.

Further, the processing module 1602 is further configured to: determine the first slot corresponding to each of first RVs other than a first RV which is the last one in the RV sequence as the start transmission position, in which the RV sequence includes only first RVs; or, determine the first slot corresponding to at least one first RV as the start transmission position, in which the RV sequence includes the at least one first RV and at least one other RV.

Further, the processing module 1602 is further configured to: determine at least one slot used as the start transmission position corresponding to the first RV based on a number of slots occupied by each transmission of the TB and/or a modulation and coding scheme (MCS) parameter.

Further, the processing module 1602 is further configured to: determine a position determination scaling factor based on the MCS parameter; and determine the at least one slot used as the start transmission position based on the number of slots occupied by each transmission of the TB and the position determination scaling factor.

Further, the processing module 1602 is further configured to: the MCS parameter is negatively correlated with the position determination scaling factor.

Further, the processing module 1602 is further configured to: when the MCS parameter is less than a set threshold, determine the position determination scaling factor as a first value; or when the MCS parameter is greater than or equal to the set threshold, determine the position determination scaling factor as a second value, in which the second value is less than the first value.

Further, the transceiver module 1601 is further configured to: receive indication information sent by a network device; and determining the at least one slot used as the start transmission position in the first RV based on the indication information.

Further, the transceiver module 1601 is further configured to: obtain an enabling signaling; and determine the number of slots used as the starting transmission position in the first RV based on the enable signaling.

Further, the transceiver module 1601 is further configured to: determine encoded data of data to be transmitted on each slot in the first RV; and send remaining encoded data to a network device starting from encoded data corresponding to a slot where the start transmission position is located.

The communication apparatus 1600 is the network device, and the communication apparatus 1600 may include a transceiver module 1601 and a processing module 1602.

The transceiver module 1601 is configured to determine an RV sequence of more than one slot for transmitting a same TB within a CG period.

The processing module 1602 is configured to determine at least one start transmission position of the TB from the more than one slot corresponding to the RV sequence.

Further, the processing module 1602 is further configured to: repeatedly transmit the TB within a CG period based on the determined start transmission position.

Further, the processing module 1602 is further configured to: determine a first RV in the RV sequence; and determine, from more than one slot used for each transmission of the TB and corresponding to the first RV, at least one slot as the start transmission position.

Further, the processing module 1602 is further configured to: determine the first slot used for each transmission of the TB and corresponding to the first RV as the start transmission position.

Further, the processing module 1602 is further configured to: determine the first slot corresponding to each of first RVs other than a first RV which is the last one in the RV sequence as the start transmission position, in which the RV sequence includes only the first RVs; or, determine the first slot corresponding to at least one first RV as the start transmission position, in which the RV sequence includes the at least one first RV and at least one other RV.

Further, the processing module 1602 is further configured to: determine at least one slot used as the start transmission position and corresponding to the first RV based on a number of slots occupied by each transmission of the TB and/or a modulation and coding scheme (MCS) parameter.

Further, the processing module 1602 is further configured to: determine a position determination scaling factor based on the MCS parameter; and determine the at least one slot used as the start transmission position based on the number of slots occupied by each transmission of the TB and the position determination scaling factor.

Further, the processing module 1602 is further configured to: the MCS parameter is negatively correlated with the position determination scaling factor.

Further, the processing module 1602 is further configured to: when the MCS parameter is less than a set threshold, determine the position determination scaling factor as a first value; or when the MCS parameter is greater than or equal to the set threshold, determine the position determination scaling factor as a second value, in which the second value is less than the first value.

Further, the transceiver module 1601 is further configured to: send indication information to a terminal device, in which the indication information is used to indicate the at least one slot used as the start transmission position in the first RV.

Further, the transceiver module 1601 is further configured to: send an enable signaling to a terminal device, in which the enable signaling is used to determine that a number of slots used as the start transmission position in the first RV may be one or more.

Further, the transceiver module 1601 is further configured to: receive encoded data corresponding to the start transmission position on the start transmission position.

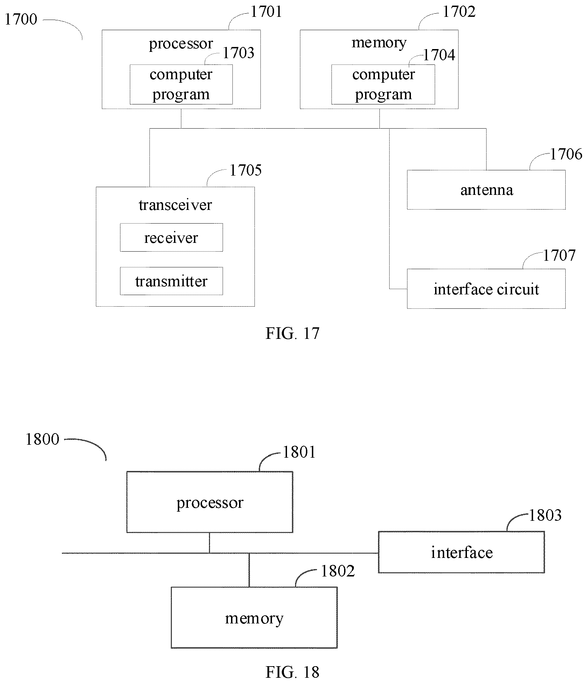

Referring to FIG. 17, FIG. 17 is a block diagram of another communication apparatus 1700 provided by an embodiment of the disclosure. The communication apparatus 70 may be a network device or a terminal device, or may be a chip, a chip system or a processor that supports the network device to realize the above-described methods, or may be a chip, a chip system or a processor that supports the terminal device to realize the above-described methods. The apparatus may be used to realize the methods described in the above method embodiments with reference to the description of the above-described method embodiments.

The communication apparatus 1700 may include one or more processors 1701. The processor 1701 may be a general purpose processor or a dedicated processor, such as, a baseband processor and a central processor. The baseband processor is used for processing communication protocols and communication data. The central processor is used for controlling the communication apparatus (e.g., a base station, a baseband chip, a terminal device, a terminal device chip, a DU, or a CU), executing computer programs, and processing data of the computer programs.

Optionally, the communication apparatus 1700 may include one or more memories 1702 on which computer programs 1704 may be stored. The processor 1701 executes the computer programs 1704 to cause the communication apparatus 1700 to perform the methods described in the above method embodiments. Alternatively, the memory 1702 may also store data. The communication apparatus 1700 and the memory 1702 may be provided separately or may be integrated together.

Optionally, the communication apparatus 1700 may also include a transceiver 1705 and an antenna 1706. The transceiver 1705 may be referred to as a transceiver unit, a transceiver machine, or a transceiver circuit, for realizing a transceiver function. The transceiver 1705 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication apparatus 1700 may also include one or more interface circuits 1707. The interface circuits 1707 are used to receive code instructions and transmit them to the processor 1701. The processor 1701 runs the code instructions to cause the communication apparatus 1700 to perform the method described in the method embodiments.

The communication apparatus 1700 is the terminal device: the processor 1701 is configured to perform step S202 in FIG. 2; step S303 in FIG. 3; and step S402 in FIG. 4. The transceiver 1705 is configured to perform step S601 in FIG. 6.

The communication apparatus 1700 is the network device, and the transceiver 1705 is configured to perform step S1002 in FIG. 10; and step S1103 in FIG. 11. The processor 1701 is configured to perform step S1201 in FIG. 12.

In an implementation, the processor 1701 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1701 may store a computer program 1703. When the computer program 1703 runs on the processor 1701, the communication apparatus 1700 is caused to perform the methods described in the method embodiments above. The computer program 1703 may be solidified in the processor 1701, and in such case the processor 1701 may be implemented by hardware.

In an implementation, the communication apparatus 1700 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the description of the above embodiments may be a network device or a terminal device (such as the first terminal device in the foregoing method embodiments), but the scope of the communication apparatus described in the disclosure is not limited thereto, and the structure of the communication apparatus may not be limited by FIG. 17. The communication apparatus may be a stand-alone device or may be part of a larger device. For example, the described communication apparatus may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

The case where the communication apparatus may be a chip or a chip system is described with reference to the schematic structure of the chip shown in FIG. 18. The chip shown in FIG. 18 includes a processor 1801 and an interface 1802. There may be one or more processors 1801, and there may be multiple interfaces 1802.

Alternatively, the chip further includes a memory 1803, and the memory 1803 is configured to store necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The embodiments of the present disclosure further provide a system for determining a start transmission position of a TB, in which the system includes a communication apparatus acting as a terminal device and a communication apparatus acting as a network device in the foregoing embodiment of FIG. 16, or the system include a communication apparatus acting as a terminal device and a communication apparatus acting as a network device in the foregoing embodiment of FIG. 17.

The present disclosure further provides a readable storage medium having stored thereon instructions that, when executed by a computer, the functions of any of the foregoing method embodiments are implemented.

The present disclosure further provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art can understand that the first, second, and other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication apparatus, and the values or representations of the parameters may be other values or representations that can be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for determining a start transmission position of a transport block (TB), performed by a terminal device, comprising:
determining a redundancy version (RV) sequence of more than one slot for transmitting a same TB within a configured grant (CG) period; and
determining at least one start transmission position of the TB from the more than one slot corresponding to the RV sequence.

2. The method of claim 1, further comprising:
repeatedly transmitting the TB within the CG period based on the start transmission position.

3. The method of claim 1, further comprising:
determining a first RV in the RV sequence; and
determining, from more than one slot used for each transmission of the TB and corresponding to the first RV, at least one slot as the start transmission position.

4. The method of claim 3, wherein determining, from the more than one slot used for each transmission of the TB and corresponding to the first RV, the at least one slot as the start position comprises:
determining a first slot used for each transmission of the TB and corresponding to the first RV as the start position.

5. The method of claim 4, further comprising:
determining the first slot corresponding to each of first RVs other than a first RV which is the last one in the RV sequence as the start position, wherein the RV sequence comprises only the first RVs; or
determining the first slot corresponding to at least one first RV as the start position, wherein the RV sequence comprises the at least one first RV and at least one other RV.

6. The method of claim 3, further comprising:
determining at least one slot used as the start position and corresponding to the first RV based on a number of slots occupied by each transmission of the TB and/or a modulation and coding scheme (MCS) parameter.

7. The method of claim 6, further comprising:
determining a position determination scaling factor based on the MCS parameter; and
determining the at least one slot used as the start position based on the number of slots occupied by each transmission of the TB and the position determination scaling factor.

8. The method of claim 7, wherein the MCS parameter is negatively correlated with the position determination scaling factor.

9. The method of claim 7, further comprising:
in response to the MCS parameter being less than a preset threshold, determining the position determination scaling factor as a first value; or
in response to the MCS parameter being great than or equal to a preset threshold, determining the position determination scaling factor as a second value, wherein the second value is less than the first value.

10. The method of claim 3, further comprising:
receiving indication information sent by a network device; and
determining the at least one slot used as the start transmission position in the first RV based on the indication information.

11. The method of any one of claims 3 to 9, further comprising:
obtaining an enable signaling; and
determining a number of slots used as the starting transmission position in the first RV based on the enable signaling.

12. The method of claim 3, further comprising:
determining encoded data of data to be transmitted on each slot in the first RV; and
sending remaining encoded data to a network device starting from encoded data corresponding to a slot where the start transmission position is located.

13. A method for determining a start position of a transport block (TB), performed by a network device, comprising:
determining a redundancy version (RV) sequence of more than one slot for transmitting a same TB within a configured grant (CG) period; and
determining at least one start transmission position of the TB from the more than one slot corresponding to the RV sequence.

14. The method of claim 13, further comprising:
repeatedly transmitting the TB within the CG period based on the start transmission position.

15. The method of claim 13, further comprising:
determining a first RV in the RV sequence; and
determining, from more than one slot used for each transmission of the TB and corresponding to the first RV, at least one slot as the start position.

16. The method of claim 15, wherein determining, from the more than one slot for each transmission of the TB and corresponding to the first RV, the at least one slot as the start position comprises:
determining the first slot used for each transmission of the TB and corresponding to the first RV as the start position.

17. The method of claim 16, further comprising:
determining the first slot corresponding to each of first RVs other than a first RV which is the last one in the RV sequence as the start position, wherein the RV sequence comprises only the first RVs; or
determining the first slot corresponding to at least one first RV as the start position, wherein the RV sequence comprises the at least one first RV and at least one other RV.

18. The method of claim 15, further comprising:
determining at least one slot used as the start position and corresponding to the first RV based on a number of slots occupied by each transmission of the TB and/or a modulation and coding scheme (MCS) parameter.

19. The method of claim 18, further comprising:
determining a position determination scaling factor based on the MCS parameter; and
determining the at least one slot used as the start position based on the number of slots occupied by each transmission of the TB and the position determination scaling factor.

20. The method of claim 19, wherein the MCS parameter is negatively correlated with the position determination scaling factor.

21. The method of claim 19, further comprising:
in response to the MCS parameter being less than a preset threshold, determining the position determination scaling factor as a first value; or
in response to the MCS parameter being great than or equal to a preset threshold, determining the position determination scaling factor as a second value, wherein the second value is less than the first value.

22. The method of claim 15, further comprising:
sending indication information to a terminal device, wherein the indication information is used to indicate the at least one slot used as the start transmission position in the first RV.

23. The method of any one of claims 15 to 22, further comprising:
sending an enable signaling to a terminal device, wherein the enable signaling is used to determine that a number of slots used as the start transmission position in the first RV may be one or more.

24. The method of claim 15, further comprising:
receiving encoded data corresponding to the start position on the start position.

25. A communication apparatus, comprising:
a transceiver module, configured to determine a redundancy version (RV) sequence of more than one slot for transmitting a same transport block (TB) within a configured grant (CG) period; and
a processing module, configured to determine at least one start transmission position of the TB transmission from the more than one slot corresponding to the RV sequence.

26. A communication apparatus, comprising:
a transceiver module, configured to determine a redundancy version (RV) sequence of more than one slot for transmitting a same transport block (TB) within a configured grant (CG) period; and
a processing module, configured to determine at least one start transmission position of the TB transmission from the more than one slot corresponding to the RV sequence.

27. A communication apparatus, comprising a processor and a memory, wherein the memory stores a computer program, and the processor executes the computer program stored in the memory, to cause the apparatus to execute the method according to any one of claims 1 to 12.

28. A communication apparatus, comprising a processor and a memory, wherein the memory stores a computer program, and the processor executes the computer program stored in the memory, to cause the apparatus to execute the method according to any one of claims 13 to 24.

29. A communication apparatus, comprising a processor and an interface circuit;
wherein the interface circuit is configured to receive a code instruction and transmit the code instruction to the processor; and
the processor is configured to run the code instruction to execute the method according to any one of claims 1 to 12.

30. A communication apparatus, comprising a processor and an interface circuit;
wherein the interface circuit is configured to receive a code instruction and transmit the code instruction to the processor; and
the processor is configured to run the code instruction to execute the method according to any one of claims 13 to 24.

31. A computer-readable storage medium storing instructions, wherein when the instructions are executed, the method of any one of claims 1 to 12 is implemented.

32. A computer-readable storage medium storing instructions, wherein when the instructions are executed, the method of any one of claims 13 to 24 is implemented.
